# EUROPEAN PATENT APPLICATION

(11) **EP 4 575 913 A1**
(43) Date of publication of application: **25.06.2025**
(21) Application number: 24221726.3
(22) Date of filing: 19.12.2024
(51) Int. Cl.: G06N 3/098, G06N 20/00, G06N 3/044, G06N 3/0464, G06N 3/0499

(54) **IDENTIFYING STRAGGLER DEVICES**

(30) Priority: 20.12.2023 FI 20236402
(71) Applicant: Nokia Solutions and Networks Oy, 02610 Espoo (FI)
(72) Inventor: BUTT, Muhammad Majid, Naperville, IL (US); KOVÁCS, István Zsolt, Aalborg (DK)
(74) Representative: Nokia EPO representatives

(57) **Abstract**

This specification discloses an apparatus, method and computer program. The method may comprise identifying one or more straggler devices among a plurality of devices, suspending transmission of an aggregated model to the one or more straggler devices for local model training, and resuming transmission of the aggregated model to at least one of the one or more straggler devices if the at least one straggler device meets one or more resumption criteria at a subsequent time.

## Description

### Field

Various example embodiments relate to identifying one or more straggler devices among a plurality of devices as part of a machine learning method.

### Background

Some machine learning methods may involve collaboration among a plurality of devices. For example, federated learning is a distributed machine learning method wherein a plurality of devices train respective local versions of a machine learning model using respective sets of local training data. The devices may transmit their respective locally trained machine learning models, represented as parameters, to an aggregation node. The aggregation node may update an aggregated model by aggregating the respective parameters received from the plurality of devices. The aggregation node may then transmit an updated version of the aggregated model to the plurality of devices for another training iteration. The process may continue for a plurality of iterations until a stop condition is met.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus, comprising: means for identifying one or more straggler devices among a plurality of devices; and means for suspending transmission of an aggregated model to the one or more straggler devices for local model training; and means for resuming transmission of the aggregated model to at least one of the one or more straggler devices if the at least one straggler device meets one or more resumption criteria at a subsequent time.

In some example embodiments, a particular device of the plurality of devices may be identified as a straggler device based on a delay in receiving a locally trained machine learning model from the particular device, wherein the delay exceeds a first threshold time period for more than a second threshold number of consecutive training iterations.

In some example embodiments, the means for identifying the one or more straggler devices may be configured to: provide respective counters for the plurality of devices; increment a respective counter for a particular device if its respective locally trained machine learning model is not received within the first threshold time period; and identify the particular device as a straggler device if the respective counter reaches a number which is more than the second threshold number.

In some example embodiments, the apparatus may further comprise: means for resetting the respective counters for the plurality of devices at resumption of a machine learning session of which the plurality of devices are members.

In some example embodiments, the apparatus may further comprise: means for resetting the respective counter for a particular straggler device for a next training iteration if the respective locally trained machine learning model is received from the particular straggler device within the first threshold time period.

In some example embodiments, the apparatus may further comprise: means for resetting the respective counter for a particular straggler device for a next training iteration if the particular straggler device meets the one or more resumption criteria.

In some example embodiments, the apparatus may further comprise: means for modifying the second threshold number for a particular straggler device if the particular straggler device meets the one or more resumption criteria, such that the particular straggler device will be re-identified as a straggler device in one or more next training iterations if its respective counter reaches a number which is more than the modified second threshold number.

In some example embodiments, the modified second threshold number may be smaller than the second threshold number. In some example embodiments, the modified second threshold number may be one-half of the second threshold number or is reduced exponentially.

In some example embodiments, the apparatus may further comprise: means for incrementing the respective counter for a particular straggler device if the particular straggler device does not meet the one or more resumption criteria.

In some example embodiments, the apparatus may further comprise: means for transmitting, to the identified one or more straggler devices, a notification message indicating its or their identification as a straggler device.

In some example embodiments, the notification message may be for causing the one or more straggler devices to suspend local model training using the aggregated model.

In some example embodiments, the apparatus may further comprise: means for transmitting, after suspending transmission of the aggregated model to the one or more straggler devices, a query message to the one or more straggler devices; and means for determining if at least one straggler device meets the one or more resumption criteria based on at least receiving a response message to the query message.

In some example embodiments, the means for determining if the at least one straggler device meets the one or more resumption criteria may be configured to determine that the least one straggler device meets the one or more resumption criteria if the response message is an acknowledgment message indicating that the one or more resumption criteria are met or if the response message comprises one or more parameters usable to determine that the one or more resumption criteria are met.

In some example embodiments, the means for determining if the at least one straggler device meets the one or more resumption criteria may be configured to determine that the least one straggler device does not meet the one or more resumption criteria if no response message is received, if the response message is a non-acknowledgment message indicating that the one or more resumption criteria are not met or if the response message comprises one or more parameters usable to determine that the one or more resumption criteria are not met.

In some example embodiments, the apparatus may further comprise: means for, upon determining that the one or more resumption criteria are not met, providing a timer; and means for transmitting a new query message after expiry of the timer for re-determining if the at least one straggler device meets the one or more resumption criteria.

In some example embodiments, the one or more resumption criteria may comprise at least one of: a network condition in which the apparatus and the at least one straggler device operates being above a third threshold; a computational power for the at least one straggler device to support the local model training being above a fourth threshold; or new training data being available at the at least one straggler device.

According to a second aspect, there is described an apparatus, comprising: means for transmitting, to a network entity, a locally trained machine learning model generated by local model training; means for receiving, from the network entity, an indication that the apparatus is identified as a straggler device and that transmission of an aggregated model is suspended; and means for resuming receiving, from the network entity, the aggregated model based on the apparatus meeting one or more resumption criteria.

In some example embodiments, the indication that the apparatus is identified as a straggler device may be based on a delay in the network entity receiving a locally trained machine learning model from the apparatus, wherein the delay exceeds a first threshold time period for more than a second threshold number of consecutive training iterations.

In some example embodiments, the apparatus may further comprise: means for suspending local model training using the aggregated model in response to receiving the indication that the apparatus is identified as a straggler device.

In some example embodiments, the apparatus may further comprise: means for collecting training data for the locally trained machine learning model during a time period between receiving the indication that the apparatus is identified as a straggler device and the resuming receiving of the aggregated model.

In some example embodiments, the apparatus may further comprise: means for, after receiving the indication that the apparatus is identified as a straggler device, receiving a query message from the network entity, and means for transmitting, to the network entity, a response message to the query message, wherein a determination that the one or more resumption criteria is met by the apparatus is performed by the network entity based at least in part on the response message.

In some example embodiments, the query message may comprise an indication of the one or more resumption criteria and the response message comprises either an acknowledgement message, in the case that the one or more criteria are met, or a non-acknowledgment message in the case that the one or more criteria are not met.

In some example embodiments, the apparatus may further comprise: means for providing a timer with the non-acknowledgment message in the case that the one or more criteria are not met; and means for receiving a new query message after expiry of the timer.

In some example embodiments, the one or more criteria may comprise at least one of: a network condition in which the network entity and the apparatus operate being above a third threshold; a computational power for the apparatus to support the local model training being above a fourth threshold; or new training data being available at the apparatus.

According to a third aspect, there is described a method, comprising: identifying one or more straggler devices among a plurality of devices; suspending transmission of an aggregated model to the one or more straggler devices for local model training; and
resuming transmission of the aggregated model to at least one of the one or more straggler devices if the at least one straggler device meets one or more resumption criteria at a subsequent time.

In some example embodiments, a particular device of the plurality of devices is identified as a straggler device based on a delay in receiving a locally trained machine learning model from the particular device, wherein the delay exceeds a first threshold time period for more than a second threshold number of consecutive training iterations.

In some example embodiments, identifying the one or more straggler devices comprises: providing respective counters for the plurality of devices; incrementing a respective counter for a particular device if its respective locally trained machine learning model is not received within the first threshold time period; and identifying the particular device as a straggler device if the respective counter reaches a number which is more than the second threshold number.

In some example embodiments, the method may further comprise: resetting the respective counters for the plurality of devices at resumption of a machine learning session of which the plurality of devices are members.

In some example embodiments, the method may further comprise: resetting the respective counter for a particular straggler device for a next training iteration if the respective locally trained machine learning model is received from the particular straggler device within the first threshold time period.

In some example embodiments, the method may further comprise: resetting the respective counter for a particular straggler device for a next training iteration if the particular straggler device meets the one or more resumption criteria.

In some example embodiments, the method may further comprise: modifying the second threshold number for a particular straggler device if the particular straggler device meets the one or more resumption criteria, such that the particular straggler device will be re-identified as a straggler device in one or more next training iterations if its respective counter reaches a number which is more than the modified second threshold number.

In some example embodiments, the modified second threshold number is smaller than the second threshold number.

In some example embodiments, the modified second threshold number is one-half of the second threshold number or is reduced exponentially.

In some example embodiments, the method may further comprise: incrementing the respective counter for a particular straggler device if the particular straggler device does not meet the one or more resumption criteria.

In some example embodiments, the method may further comprise: transmitting, to the identified one or more straggler devices, a notification message indicating its or their identification as a straggler device.

In some example embodiments, the notification message is for causing the one or more straggler devices to suspend local model training using the aggregated model.

In some example embodiments, the method may further comprise: transmitting, after suspending transmission of the aggregated model to the one or more straggler devices, a query message to the one or more straggler devices; and determining if at least one straggler device meets the one or more resumption criteria based on at least receiving a response message to the query message.

In some example embodiments, the determining if the at least one straggler device meets the one or more resumption criteria may comprise determining that the least one straggler device meets the one or more resumption criteria if the response message is an acknowledgment message indicating that the one or more resumption criteria are met or if the response message comprises one or more parameters usable to determine that the one or more resumption criteria are met.

In some example embodiments, the method may further comprise: determining if the at least one straggler device meets the one or more resumption criteria comprises determining that the least one straggler device does not meet the one or more resumption criteria if no response message is received, if the response message is a non-acknowledgment message indicating that the one or more resumption criteria are not met or if the response message comprises one or more parameters usable to determine that the one or more resumption criteria are not met.

In some example embodiments, the method may further comprise: upon determining that the one or more resumption criteria are not met, providing a timer; and transmitting a new query message after expiry of the timer for re-determining if the at least one straggler device meets the one or more resumption criteria.

In some example embodiments, the one or more resumption criteria may comprise at least one of: a network condition in which the apparatus and the at least one straggler device operates being above a third threshold; a computational power for the at least one straggler device to support the local model training being above a fourth threshold; or new training data being available at the at least one straggler device.

According to a fourth aspect, there is described a method, comprising: transmitting, to a network entity, a locally trained machine learning model generated by local model training; receiving, from the network entity, an indication that an apparatus is identified as a straggler device and that transmission of an aggregated model is suspended; and resuming receiving, from the network entity, the aggregated model based on the apparatus meeting one or more resumption criteria.

In some example embodiments, the indication that the apparatus is identified as a straggler device is based on a delay in the network entity receiving a locally trained machine learning model from the apparatus, wherein the delay exceeds a first threshold time period for more than a second threshold number of consecutive training iterations.

In some example embodiments, the method may further comprise: suspending local model training using the aggregated model in response to receiving the indication that the apparatus is identified as a straggler device.

In some example embodiments, the method may further comprise: collecting training data for the locally trained machine learning model during a time period between receiving the indication that the apparatus is identified as a straggler device and the resuming receiving of the aggregated model.

In some example embodiments, the method may further comprise: after receiving the indication that the apparatus is identified as a straggler device, receiving a query message from the network entity, and transmitting, to the network entity, a response message to the query message, wherein a determination that the one or more resumption criteria is met by the apparatus is performed by the network entity based at least in part on the response message.

In some example embodiments, the query message may comprise an indication of the one or more resumption criteria and the response message comprises either an acknowledgement message, in the case that the one or more criteria are met, or a non-acknowledgment message in the case that the one or more criteria are not met.

In some example embodiments, the method may further comprise: providing a timer with the non-acknowledgment message in the case that the one or more criteria are not met; and receiving a new query message after expiry of the timer.

In some example embodiments, the one or more criteria may comprise at least one of:
a network condition in which the network entity and the apparatus operate being above a third threshold; a computational power for the apparatus to support the local model training being above a fourth threshold; or new training data being available at the apparatus.

According to a fifth aspect, there is described a computer program product, comprising a set of instructions which, when executed on an apparatus, is configured to cause the apparatus to carry out a method, comprising: identifying one or more straggler devices among a plurality of devices; suspending transmission of an aggregated model to the one or more straggler devices for local model training; and resuming transmission of the aggregated model to at least one of the one or more straggler devices if the at least one straggler device meets one or more resumption criteria at a subsequent time.

In some example embodiments, the fifth aspect may include any other feature mentioned with respect to the method of the third aspect.

According to a sixth aspect, there is described a computer program product, comprising a set of instructions which, when executed on an apparatus, is configured to cause the apparatus to carry out a method, comprising: transmitting, to a network entity, a locally trained machine learning model generated by local model training; receiving, from the network entity, an indication that an apparatus is identified as a straggler device and that transmission of an aggregated model is suspended; and resuming receiving, from the network entity, the aggregated model based on the apparatus meeting one or more resumption criteria.

In some example embodiments, the sixth aspect may include any other feature mentioned with respect to the method of the fourth aspect.

According to a seventh aspect, there is described a non-transitory computer readable medium comprising program instructions stored thereon to cause the apparatus to carry out a method, comprising: identifying one or more straggler devices among a plurality of devices; suspending transmission of an aggregated model to the one or more straggler devices for local model training; and resuming transmission of the aggregated model to at least one of the one or more straggler devices if the at least one straggler device meets one or more resumption criteria at a subsequent time.

In some example embodiments, the seventh aspect may include any other feature mentioned with respect to the method of the third aspect.

According to an eighth aspect, there is described a non-transitory computer readable medium comprising program instructions stored thereon to cause the apparatus to carry out a method, comprising: transmitting, to a network entity, a locally trained machine learning model generated by local model training; receiving, from the network entity, an indication that an apparatus is identified as a straggler device and that transmission of an aggregated model is suspended; and resuming receiving, from the network entity, the aggregated model based on the apparatus meeting one or more resumption criteria.

In some example embodiments, the eighth aspect may include any other feature mentioned with respect to the method of the fourth aspect.

According to a ninth aspect, there is described an apparatus comprising at least one processing core, at least one memory including computer program code, the at least one memory and the computer program code being configured to, with the at least one processing core, cause the apparatus to: identify one or more straggler devices among a plurality of devices; suspend transmission of an aggregated model to the one or more straggler devices for local model training; and resume transmission of the aggregated model to at least one of the one or more straggler devices if the at least one straggler device meets one or more resumption criteria at a subsequent time.

In some example embodiments, the ninth aspect may include any other feature mentioned with respect to the method of the third aspect.

According to a tenth aspect, there is described an apparatus comprising at least one processing core, at least one memory including computer program code, the at least one memory and the computer program code being configured to, with the at least one processing core, cause the apparatus to: transmit, to a network entity, a locally trained machine learning model generated by local model training; receive, from the network entity, an indication that the apparatus is identified as a straggler device and that transmission of an aggregated model is suspended; and resume receiving, from the network entity, the aggregated model based on the apparatus meeting one or more resumption criteria.

In some example embodiments, the tenth aspect may include any other feature mentioned with respect to the method of the fourth aspect.

### Drawings

Example embodiments will be described, by way of non-limiting example, with reference to the accompanying drawings, in which:
FIG. 1 is a schematic view of a network scenario for machine learning;
FIG. 2 is a schematic view of an example machine-learning function collaboration;
FIG. 3 is a graph indicating delays for different devices to provide local models to a network node;
FIG. 4 is a flow diagram indicating operations according to one or more example embodiments;
FIG. 5 is a signal flow diagram indicating operations according to one or more example embodiments;
FIG. 6 is a flow diagram indicating operations according to one or more example embodiments;
FIG. 7 is a flow diagram indicating operations according to one or more example embodiments;
FIG. 8 is a block diagram of an apparatus, according to one or more example embodiments; and
FIG. 9 is a plan view of a non-transitory media, according to one or more example embodiments.

### Detailed Description

Various example embodiments relate to machine learning (ML) and in particular to federated learning (FL) methods.

Various example embodiments may comprise an apparatus, method and computer program for identifying one or more straggler devices among a plurality of devices.

FL is a type of distributed ML process wherein an aggregation node updates a centralized model (hereafter "aggregated model") by aggregating locally trained machine learning model (hereafter "local models") received from a plurality of devices. The devices may train respective local models using local training data. The local training data may or may not include sensitive data. The devices may transmit their respective local models to the aggregation node. The local models may comprise parameters. The aggregation node may update the aggregated model by aggregating the parameters received from the plurality of devices. The aggregation node may transmit the updated aggregated model to the plurality of devices for another training iteration. The process may continue over one or more further training iterations until a stop condition is met. The stop condition may be when a predetermined number of training iterations are complete and/or a convergence condition is met. At this time, the aggregated model may be considered finalised.

The above FL process may be referred to a FL session. The plurality of devices may be referred to as members of the FL session.

FL methods may reduce or minimize the amount of data transmitted across a network between the aggregation node and the plurality of devices, whilst reducing the need for said devices to transmit their respective sets of local training data. The devices may benefit in that the aggregated model takes into consideration local training data of other devices, without the need to access that local training data.

In some example embodiments, the devices referred to above may comprise user terminals or user equipment (UE). For example, a UE may comprise, but is not limited to, a mobile telephone, a tablet computer, a laptop computer, a personal computer, an Internet-of-Things (IoT) device, a digital assistant or a wearable terminal such as a smartwatch.

The plurality of UEs may be of the same type, for example all mobile telephones, or may be of different types, for example mobile telephones and wearable terminals. The UEs may be associated with respective users.

For ease of explanation, the term UE may be used hereinafter in various places instead of device.

For example, the aggregation node may be a network entity such as, but not restricted to, a network node.

The network node and UEs may communicate over an air interface.

The air interface may be configured in accordance with a Radio Access Technology (RAT) which both the network node and the UEs are configured to support. Examples of cellular RATs include Long Term Evolution (LTE) or fifth generation (5G) New Radio (NR) radio access technology, or 5G beyond, or sixth generation (6G) radio access technology or other communications technologies. For example, in the context of LTE, the network node may be referred to as an eNB or, in the context of 5G/NR, the network node may be referred to as a gNB. In some example embodiments, the network node may be referred to as a Transmission and Reception Point, TRP, or may control multiple TRPs that may be co-located or non-co-located. In some example embodiments, the network node may be a relay.

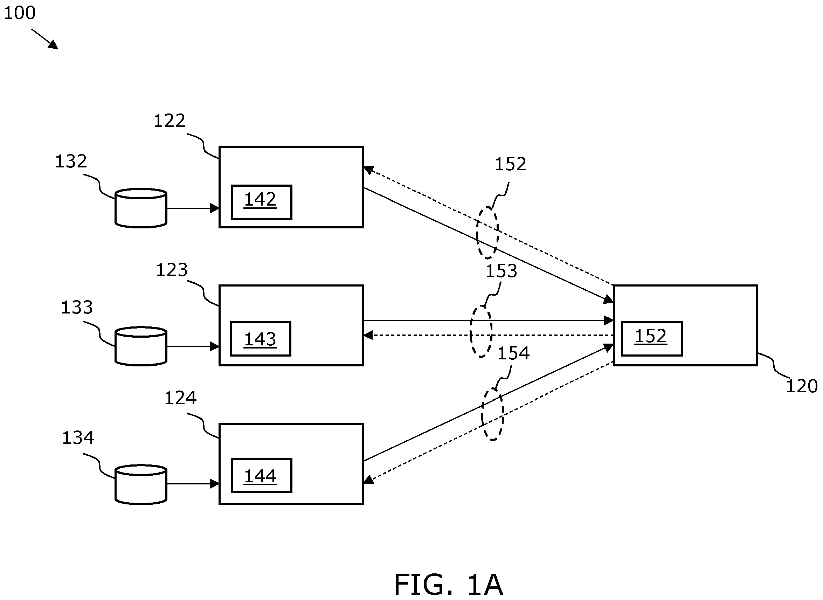

FIG. 1A shows an example network scenario 100 comprising a network node 120 and first to third UEs 122 - 124. Although three UEs 122 - 124 are shown, in other example embodiments there may be only two UEs or more than three UEs. The first to third UEs 122 - 124 may be members of an FL session. The first to third UEs 122 - 124 may comprise, or have access to, respective local datasets 132 - 134 which may be stored on one or more memories. The local datasets 132 - 134 may comprise any type of data, which may or may not include sensitive data, useful for training respective local models. The first to third UEs 122 - 124 may comprise appropriate software and/or hardware resources for local training of respective local models 142 - 144 using one or more processors. The first to third UEs 122 - 124 may also be configured to transmit and receive data with the network node 120 using respective channels 152 - 154. The respective channels 152 - 154 may comprise wireless channels over a cellular air interface using a RAT, examples of which are mentioned above.

In some example embodiments, the network node 120 may provide and transmit over the respective channels 152 - 154 an initial model 152 to the first to third UEs 122 - 124.

The first to third UEs 122 - 124 may, in a first training iteration, perform local model training to train the initial ML model 152 to provide respective local models 142 - 144. The time ("training time") to perform local model training may be dependent on the computational power of the respective first to third UEs 122 - 124.

When local model training is complete, the first to third UEs 122 - 124 may transmit their respective local models to the network node 120. The network node 120, or another network entity in communication with the network node, may aggregate the respective local models to provide an aggregated model. The respective local models 142 - 144 may comprise respective sets of parameters. The network node 120 or other network entity may use a parameter aggregation algorithm such as FedAvg that averages the parameters. Other aggregation algorithms may be used.

The above process may repeat iteratively for one or more successive training iterations, for example for many hundreds or thousands of successive iterations, until the above-mentioned stop condition is met. For each training iteration, the aggregated model may be updated to provide a latest version of the aggregated model.

The network node 120 may receive the respective local models 142 - 144 at different times, depending on the above training time at the first to third UEs 122 - 124 and/or the respective network condition in which the network node 120 and the first to third UEs 122 - 124 operate. The network condition may indicate the quality of the respective channels 152 - 154 for receiving the respective local models 142. In some cases, for example when a channel is dropped, no local model may be received from a particular one of the first to third UEs 122 - 124 until such time as the channel is re-established.

The first to third UEs 122 - 124 may also comprise different computational resources, for example different hardware resources, which may affect their respective training times. Example hardware resources include, but are not limited to, number and/or type of processor (e.g., CPU and/or GPU), processor clock speed, and/or memory size and/or type of memory (e.g., DRAM, SRAM). The training time may also depend on what percentage or proportion of such hardware resource(s) are being used for other processing tasks not related to local model training. For example, the first UE 122 may comprise a faster CPU and/or GPU than the second UE 123, but the first UE may already be performing a processing-intensive task, such as video processing, which means that the second UE 123 can train its local machine learning model faster than the first UE. The first to third UEs 122 - 124 may also experience different network conditions with the network node 120, for example different bandwidths due to channel quality and/or due to existing transmission(s) relating to other tasks, e.g., video streaming.

In some FL scenarios, such as (but not limited to) synchronous mode FL, aggregation should not be performed until local models from all UEs which are members of a FL session have been received by the network node 120 or other network entity that performs aggregation. Thus, a relatively long training time and/or relatively poor network conditions between one or more of the UEs and the network node 120 may cause significant delays. This effect can also be observed in asynchronous model FL, wherein local models are not required from all UEs before model aggregation, but delays in receiving local models from too many UEs may result in the network node, or other network entity that performs aggregation, dropping those local models.

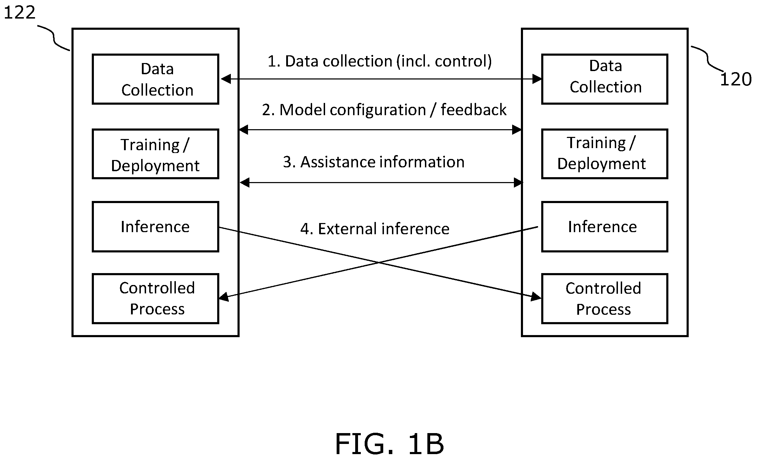

For completeness, FIG. 1B illustrates an example ML-enabled collaboration process. A UE, in this case the first UE 122, communicates and collaborates with a network entity, represented here by the network node 120. For example, the first UE 122 may perform data collection and exchange, and then the first UE 122 may provide a local model to the network node 120. The network node 120 may respond with an aggregated model, as part of a training and deployment process. The first UE 122 and the network node 120 may exchange assistance information. The first UE 122 may perform an inference and provide the inference to a controlled process of the network node 120. The network node 120 may perform an inference and provide its inference to a controlled process of the first UE 122.

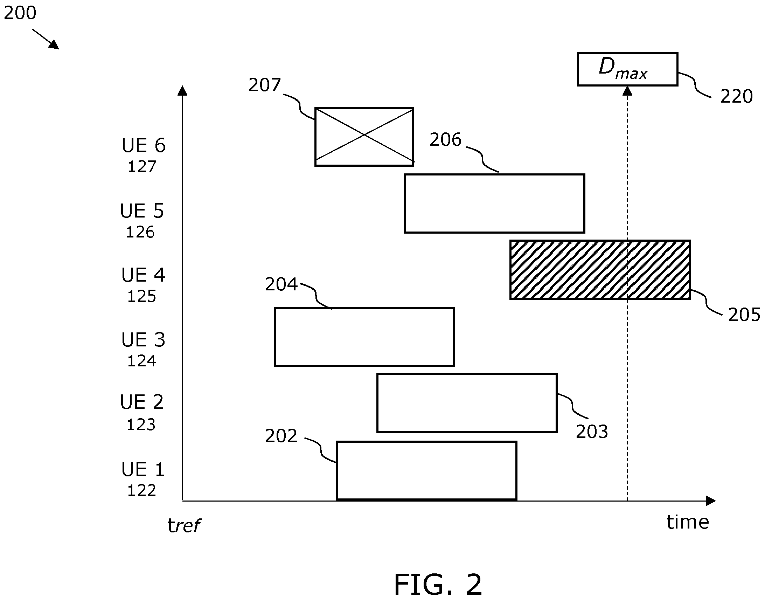

FIG. 2 is a graph 200 illustrating the effect of delays. It is assumed in this case that a FL session comprises the FIG. 1 first to third UEs 122 - 124 (respectively referred to as UE1 - UE3) and fourth to sixth UEs 125 - 127 (respectively referred to as UE4 - UE6.)

The graph 200 indicates the time taken, from a reference time *tref,* for the network node 120 to receive respective local models 202 - 207 from the first to sixth UEs 122 - 127. The reference time *tref* may refer to the time at which the aggregated machine learned model was transmitted to the first to sixth UEs 122 - 127, or another reference time known to the network node 120.

It will be seen that the respective local models 202, 203, 204, 206 from the first, second, third and fifth UEs 122, 123, 124, 126 are trained and received within a first threshold time period *Dmax* 220. The local model 205 from the fourth UE 125 is not received until after the first threshold time period *Dmax* 220. The local model 207 from the sixth UE 127 is not received at all, possibly due to a failure at the sixth UE, or a dropped signal (e.g., no coverage).

The first threshold time period *Dmax* 220 may be a user or network -defined value representing a maximum acceptable time that the network node 120 can wait for the local models 202 - 207 in a given training iteration.

It will be appreciated that the fourth UE 125 and the sixth UE 127 may prevent, or at least slow down, the updating of the aggregated model by the network node 120 or other network entity. The effect of this may be cumulative over successive training iterations if the underlying cause, e.g., limited processing power and/or poor network conditions, remain.

Example embodiments may overcome or alleviate such issues by identifying one or more straggler devices (e.g., straggler UEs).

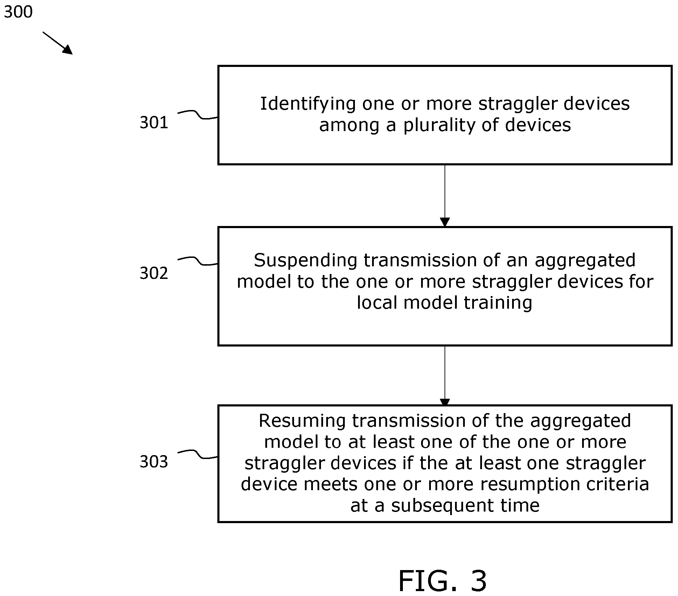

FIG. 3 is a flow diagram indicating operations 300 according to one or more other example embodiments. The operations 300 may be performed in hardware, software, firmware or a combination thereof. For example, the operations 300 may be performed individually, or collectively, by a means, wherein the means may comprise at least one processor and at least one memory storing instructions that, when executed by the at least one processor, cause the performance of the operations. For example, the operations 300 may be performed by a network node, such as by the network node 120 of FIG. 1.

A first operation 301 may comprise identifying one or more straggler devices among a plurality of devices.

A second operation 302 may comprise suspending transmission of an aggregated model to the one or more straggler devices for local model training.

A third operation 303 may comprise resuming transmission of the aggregated model to at least one of the one or more straggler devices if the at least one straggler device meets one or more resumption criteria at a subsequent time.

In some example embodiments, a straggler device may be identified based on a delay in receiving from a particular device a local model, wherein the delay exceeds a first threshold time period, *Dmax,* for more than a second threshold number, *N*, of consecutive training iterations. In some example embodiments, as an alternative, a straggler device may be identified based on a delay in receiving from the particular device a locally trained machine learning model for more than a predetermined threshold number of times in a timer window of a predetermined number of iterations.

The plurality of devices may be those which are members of a FL session. As such the plurality of devices, e.g., via respective identifiers, e.g., may be known in advance.

The plurality of devices may comprise UEs as mentioned above.

The values of the first threshold time period, *Dmax,* and the second threshold number, *N,* may be user defined and/or network defined.

For example, the value of the first threshold time period, *Dmax,* may represent a time period which gives sufficient time for the UEs to train their respective local models to a required accuracy, which may depend on the type and/or purpose of the aggregated model.

In some example embodiments, a further operation may comprise transmitting the aggregated model to the one or more devices not identified as straggler devices for local model training in a next training iteration.

In some example embodiments, the aggregated model may be computed using respective local models of a current training iteration received from at least some of the plurality of devices.

In some example embodiments, the identifying operation 301 may comprise:
- providing respective counters, *Cᵢ*, for the plurality of devices;
- incrementing a respective counter for a particular device if its respective local model is not received from the particular device within the first threshold time period, *Dmax,* and
- identifying that the particular device is a straggler device if the respective counter exceeds the second threshold number, *N*.

In the above, *i* may refer to an identifier or index of a device.

In some example embodiments, at the start of a FL session of which the plurality of devices are members, the respective counters, *Cᵢ*, for the plurality of devices may be reset, for example to zero or some other known starting value.

In some example embodiments, for example after one or more training iterations, the respective counter, *Cᵢ*, for a particular straggler device may be reset for a next training iteration if the respective local model is received from the particular straggler device within the first threshold time period, *Dmax.*

In some example embodiments, for example after one or more training iterations, the respective counter, *Cᵢ*, for a particular straggler device may be reset for a next training iteration if the particular straggler device meets the one or more resumption criteria, to be explained below.

In some example embodiments, the second threshold number, *N,* may at least initially be a common value among the plurality of devices. In some example embodiments, the plurality of devices may have associated second threshold numbers, *Ni,* which may individually be modified over one or more successive training iterations.

For example, if a particular device, after being identified as a straggler device, is determined to have met the one or more resumption criteria, such that transmission of the aggregated model can be resumed, its associated second threshold number *Ni* may be reduced so as to take a smaller value. For example, the modified second threshold number *Ni* may be one-half of the current second threshold number (*Ni* → *Ni* /2) or the second threshold number *Ni* may reduce exponentially over successive training iterations (e.g., *Ni* → *Ni* /2, *Ni* /4, *Ni*/8 etc.)

In some example embodiments, the respective counter, *Cᵢ*, for a particular straggler device may be incremented if the particular straggler device does not meet the one or more resumption criteria.

In some example embodiments, another operation may comprise transmitting to the identified one or more straggler devices a notification message, indicating its or their identification as a straggler device. The notification message may be provided in any suitable form, e.g., one or more signals or one or more data packets using any suitable communications protocol. In some example embodiments, the notification message may be for causing the one or more straggler devices to suspend local model training using the aggregated model. That is, the one or more straggler devices may be configured, responsive to receiving the notification message, to suspend their local training based on the aggregated model. The suspending may be temporary, thereby allowing the one or more straggler devices effectively to be reinstated to the FL session if the one or more resumption criteria are met at a later time.

In some example embodiments, another operation may comprise transmitting, after suspending transmission of the aggregated model to the one or more straggler devices, a query message to the one or more straggler devices. Another operation may comprise determining if at least one straggler device meets the one or more resumption criteria based on at least receiving a response message to the query message. The query message and the response message may be in any suitable form, e.g., one or more signals or one or more data packets using any suitable communications protocol.

In some example embodiments, determining if the at least one straggler device meets the one or more resumption criteria may comprise determining that an acknowledgment message is received, indicating that the one or more resumption criteria are met. In this case, the query message may comprise an enquiry for the at least one straggler device to determine if it meets the one or more resumption criteria, examples of which are given below. If it does, said at least one straggler device may transmit the acknowledgement message. If it does not, said at least one straggler device may transmit a non-acknowledgment message.

In some example embodiments, determining if the at least one straggler device meets the one or more resumption criteria may alternatively or additionally comprise determining that the response message comprises one or more parameters usable to determine if the one or more resumption criteria are met. In this case, the query message may comprise an enquiry for the at least one straggler device to provide the one or more parameters, at least some of which may be received in the response message. The received parameters may be used to determine if the one or more resumption criteria are met.

In the case that no response message is received, for example within a predetermined threshold time period from transmitting the query message, it may be determined that the one or more resumption criteria are not met.

In some example embodiments, the one or more resumption criteria may comprise at least one of: a network condition in which the apparatus and the at least one straggler device operates being above a third threshold; a computational power for the at least one straggler device to support the local model training being above a fourth threshold; or new training data being available at the at least one straggler device.

In some example embodiments, upon determining that the one or more resumption criteria are not met, a timer may be provided such that, after expiry of the timer, the determination operation may be re-performed which may comprise transmitting a new query message to the at least one straggler device for determining if the at least one straggler device meets the one or more resumption criteria. The timer may, for example, be provided by the at least one straggler device. The timer may, for example, indicate a future time at which the at least one straggler device determines or estimates that it will meet the one or more resumption criteria. The timer may, alternatively, be provided by another entity, which may be a network entity.

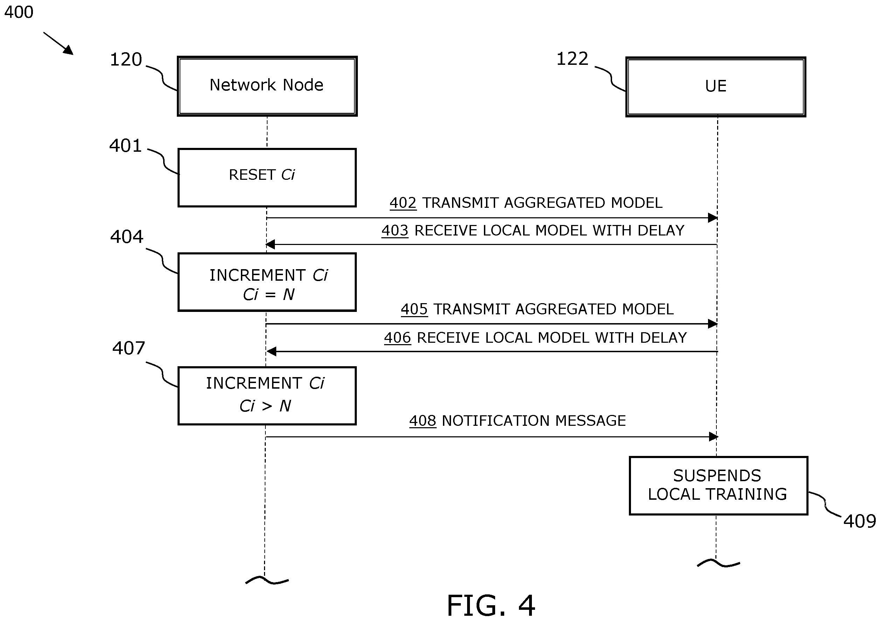

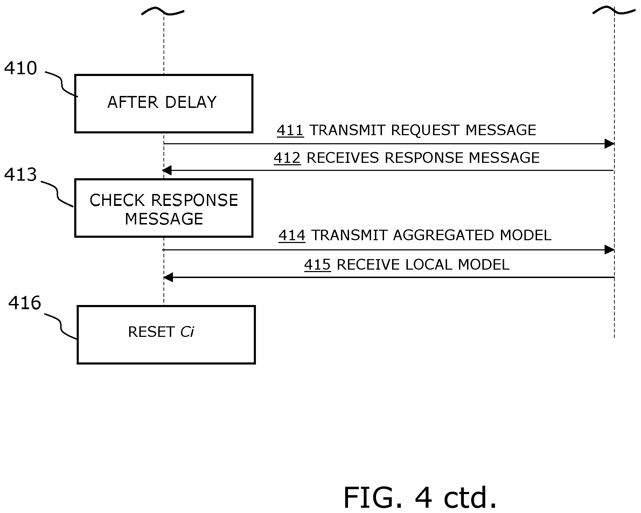

FIG. 4 is a signal flow diagram 400 according to one or more example embodiments. The signal flow diagram 400 is indicative of signaling, whether in the analog or digital domain, between the network node 120 and the first UE 122 shown in FIG. 1 for a particular situation.

A first operation 401 may comprise the network node 120 resetting respective counters, *Cᵢ*, for the first to third UEs 122 - 124.

A second operation 402 may comprise the network node 120 transmitting an aggregated model, which may be an initial model, to the first UE 122.

A third operation 403 may comprise the network node 120 receiving a local model of a current training iteration from the first UE 122.

In this example, the local model is received at the network node 120 with a delay that exceeds the first threshold time period, *Dmax.*

A fourth operation 404 may comprise the network node 120 incrementing the counter, *C*₁, for the first UE 122 such that *C*₁ = 1.

The same, or a different operation, may also comprise the network node 120 comparing the incremented value of *C*₁ with the second threshold number N.

It is assumed in this example that *N* = 1 and therefore that *C*₁ = *N.*

The network node 120, or another network entity, may at this time perform aggregation of the local models, including that received from the first UE 122, to provide a latest version of the aggregated model.

A fifth operation 405 may comprise the network node 120 transmitting the aggregated model to, among others, the first UE 122.

A sixth operation 406 may comprise the network node 120 receiving a locally trained machine learning model of a next iteration from the first UE 122.

In this example, the local model model is again received at the network node 120 with a delay that exceeds the first threshold time period, *Dmax.*

A seventh operation 407 may comprise the network node 120 incrementing the counter, *C*₁, for the first UE 122 such that *C*₁ = 2.

The same, or a different operation, may also comprise the network node 120 comparing the incremented value of *C*₁ with the second threshold number *N*.

It follows that *C*₁ > *N*, or, in other words, the respective counter for the first UE 122 exceeds the second threshold number.

The network node 120, or another network entity, may at this time perform aggregation of the local models, including that received from the first UE 122, to provide a latest version of the aggregated model.

The network node 120 may suspend transmitting the aggregated model to the first UE 122 because *C*₁ > *N.*

An eighth operation 408 may comprise the network node 120 transmitting a notification message to the first UE 122.

The notification message may inform the first UE 122 that it has been identified as a straggler device and may control it, or cause its control, to suspend local model training.

A ninth operation 409, performed by the first UE 122 and in response to receiving the notification message from the network node 120, may comprise the first UE 122 suspending its local model training.

The first UE 122 may, however, still collect new training data, if available.

Subsequent operations may be performed at a later point in time, after a random or predetermined time period, *Tdelay,* counted from the time of determining to suspend transmission of the aggregated model to the first UE 122. Said subsequent operations relate to determining whether to resume transmission of the aggregated model to the first UE 122.

A tenth operation 410 may comprise the network node 120 waiting for expiry of the time period, *Tdelay.*

During this time period, *Tdelay,* one or more further training iterations may take place involving UEs other than the first UE 122.

An eleventh operation 411 may comprise the network node 120 transmitting a query message to the first UE 122 upon expiry of the delay period, *Ddelay.* The query message may be for determining a current context of the first UE 122 in terms of one or more resumption criteria.

For example, the query message may request that the first UE 122 determine whether one or more of the following resumption criteria are met: a network condition between the first UE and the network node 120 is above the third threshold; a computational power for the first UE to support the local model training is above the fourth threshold; or new training data is available at the first UE. The query message may for example include certain thresholds that certain one or more parameters (examples given below) should meet.

Any combination of the above may be required in some example embodiments.

The first UE 122 may signal that the at least one resumption criteria are met by an acknowledgement (ACK) response message or are not met by means of a non-acknowledgment (NACK) response message.

Alternatively, the query message may request that the first UE 122 provide one or more parameters in a response message for the network node 120 to determine whether the one or more resumption criteria are met.

Said one or more parameters may, for example, comprise at least one of the following:
- current clock speed of CPU and/or GPU;
- utilization of processing resources, e.g., percentage or proportion of CPU and/or GPU being used other than for local model training;
- utilization of memory resources, e.g., percentage or proportion of RAM being used other than for local model training;
- current bandwidth, e.g., in bits/second, available to transmit the locally trained machine learning model to the network node; or
- one or more other quality of service (QoS) parameters.

The network node 120 may store, or have access, to reference parameters indicating respective thresholds that said received parameters, either singly or in combination, need to meet in order for the one or more resumption criteria to be met.

A twelfth operation 412 may comprise the network node 120 receiving a response message from the first UE 122. The response message may be responsive to the request message transmitted in the eleventh operation 411.

A thirteenth operation 413 may comprise the network node 120 checking the received response message.

If the response message is an ACK response message, the network node 120 may determine that the first UE 122 meets the one or more resumption criteria and can be reinstated. If no response message is received, or if the response message is a NACK response message, the network node 120 may determine that the first UE 122 does not meet the one or more resumption criteria and cannot be reinstated.

In the shown example, it is assumed that an ACK message is received in the twelfth operation 412 and hence the thirteenth operation 413 may determine to reinstate the first UE 122.

A fourteenth operation 414 may comprise the network node 120 resuming transmission of the aggregated model, i.e., the latest version of the aggregated model, to the first UE 122.

A fifteenth operation 415 may comprise the network node 120 receiving a local model of a next iteration from the first UE 122.

A sixteenth operation 416, which can be performed before, during or after the fourteenth operation 414, may comprise resetting the respective counter, *C*₁, for the first UE 122 and the process may return to the second operation 402.

As mentioned previously, where the first UE 122 has an associated second threshold number, *Ni,* this may be modified for the next training iteration.

By suspending transmission of the aggregated model, more efficient use of made of transmission resources. Delays to the FL process may be reduced. By resuming transmission of the aggregated model at a later time, a straggler UE having useful training data may be removed from the FL process temporarily and can continue to contribute at such time that they should not significantly delay future training iterations.

Example embodiments are useful for synchronous FL methods whereby the network node 120 may require local models from all UEs. Example embodiments may also apply to asynchronous FL methods whereby a subset of UEs may be selected for one or more training iterations, and then another subset of UEs are selected for one or more other training iterations and so on. For example, knowledge of straggler UEs over time may assist in improving selection of subsets of UEs for one or more subsequent iterations thereby limiting performance degradation.

In some example embodiments, the network node 102 may determine that the aggregated model is final, for example after a predetermined number of training iterations and/or when the aggregated model converges in the sense that its "loss" settles to within a predetermined error range. If so, the respective counters, *Cᵢ*, for the first to third UEs 122 may be reset.

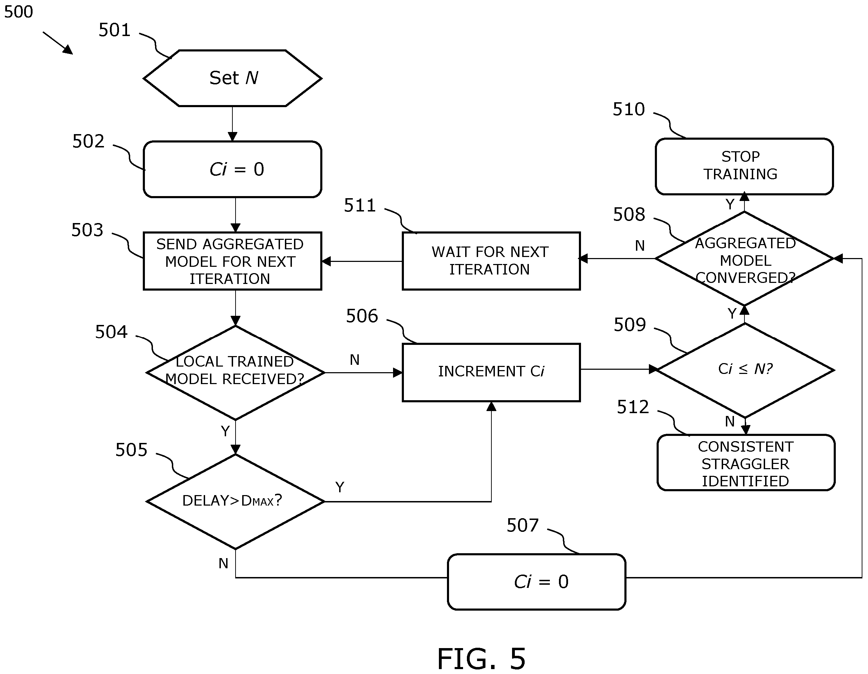

FIG. 5 is a flow diagram showing operations 500 according to one or more example embodiments. The operations 500 relate to an implementation example for identifying one or more straggler UEs.

The operations 500 may be performed in hardware, software, firmware or a combination thereof. For example, the operations 500 may be performed individually, or collectively, by a means, wherein the means may comprise at least one processor and at least one memory storing instructions that, when executed by the at least one processor, cause the performance of the operations. The operations 500 may, for example, be performed by a node which transmits and receives data from the UEs. For example, the operations 500 may be performed by a network node, such as by the network node 120 of FIG. 1.

A first operation 501 may comprise setting a value of the second threshold number *N.*

This may be a global value of *N,* or respective values of *Ni* may be set for the UEs, at least some of which may be different from others.

A second operation 502 may comprise resetting respective counters, *Cᵢ*, for the UEs.

A third operation 503 may comprising transmitting (sending) to the UEs the aggregated model for the next training iteration.

A fourth operation 504 may comprise, for a particular UE, determining if a local model is received from the particular UE.

If a local model is received, the process moves to a fifth operation 505. If not, the process moves to a sixth operation.

The fifth operation 505 may comprise determining if the delay to receive the local model is greater than *Dmax.* If so, the process moves to the sixth operation 506. If not, the process moves to a seventh operation 507, in which the counter, *Cᵢ* is reset, and then to an eighth operation 508.

The sixth operation 506 may comprise incrementing the counter, *Cᵢ*, for the particular UE. The process then moves to a ninth operation 509.

The eighth operation 508 may comprise determining if the aggregated model has converged. If so, the process moves to a tenth operation 510 in which the FL process is stopped. If not, the process moves to an eleventh operation 511 in which the next training iteration is awaited.

The process may then move back to the third operation 503.

The ninth operation 509 may comprise determining if the counter, *Cᵢ*, for the particular UE is less than or equal to the value of *N.* If so, the process moves to the eighth operation 508. If not, the process moves to a twelfth operation 512.

The twelfth operation 512 may comprise identifying the particular UE as a straggler UE.

The operations 500 may be performed in parallel for all UEs which are members of the FL session.

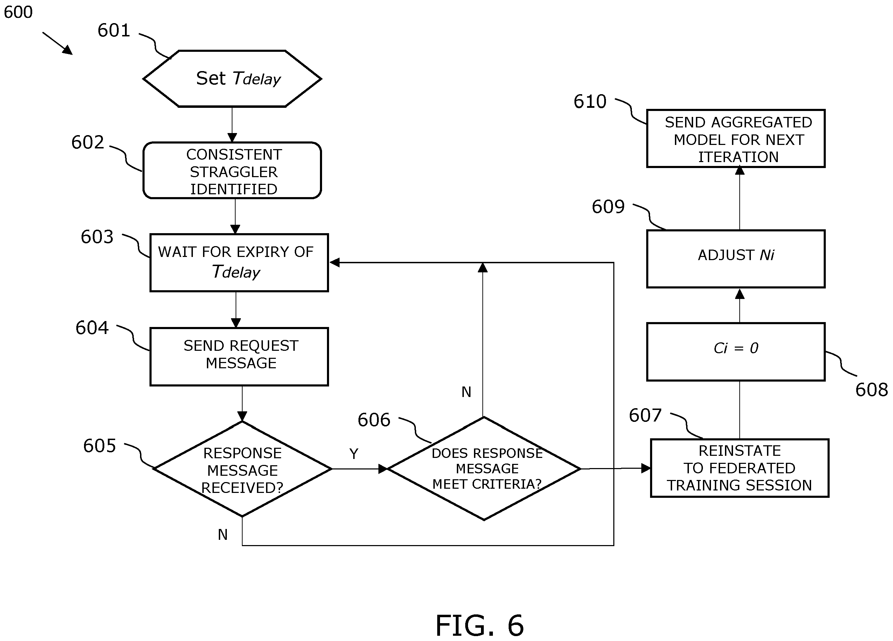

FIG. 6 is a flow diagram showing operations 600 according to one or more example embodiments. The operations 600 relate to an implementation example for reinstatement of a straggler UE.

The operations 600 may be performed in hardware, software, firmware or a combination thereof. For example, the operations 600 may be performed individually, or collectively, by a means, wherein the means may comprise at least one processor and at least one memory storing instructions that, when executed by the at least one processor, cause the performance of the operations. The operations 600 may, for example, be performed by a node which transmits and receives data from the UEs. For example, the operations 600 may be performed by a network node, such as by the network node 120 of FIG. 1.

A first operation 601 may comprise setting a value of a time period, *Tdelay.* For example, *Tdelay* may be a random time period (within a particular time range) or a predetermined time period (e.g., five minutes).

A second operation 602 is equivalent to the twelfth operation 512 of FIG. 5.

A third operation 603 may comprise waiting for expiry of *Tdelay.*

A fourth operation 604 may comprise transmitting (sending) a request message to a particular straggler UE.

A fifth operation 605 may comprise determining if a response message is received from the particular straggler UE. If so, the process moves to a sixth operation 606. If not, the process then moves back to the third operation 603.

The sixth operation 606 may comprise determining if the response message meets one or more of the resumption criteria, examples of which are given above. If so, the process moves to a seventh operation 607. If not, the process moves to the third operation 603.

If not, in some example embodiments, the particular straggler UE may provide a timer indicating an estimated future time at which it should be able to meet the one or more resumption criteria. For example, the particular straggler UE may be able to determine or estimate the future time based on what computational processes are currently being run and/or are utilizing bandwidth, and how long those computational processes will run for. A further operation (not shown) may therefore comprise waiting for the timer to expire and thereafter moving to the fourth operation 604.

The seventh operation 607 may comprise reinstating the particular straggler UE for resuming transmission of the aggregated model. An eighth operation 608 may comprise resetting the counter, *Cᵢ*, for the particular straggler UE. The process may then optionally move to a ninth operation 609.

The ninth operation 609 may comprise the network node 120 modifying the value of the second threshold number *Ni* associated with the particular UE. Modifying the value of *Ni* may comprise reducing its value, the reduced value being used to again identify whether the particular UE is a straggler UE in one or more next training iterations. The rationale is that the particular UE has a historical reliability issue, and hence may not be in a suitable state to provide its locally trained machine learning model. As such, a stricter restraint may be used. The way in which the value of *Ni* may be modified may be a matter of choice, but one example is to use one-half of the current value, such that *Ni* → *Ni* /2 for a next training iteration. As another example, the network node 120 may reduce the value of *Ni* exponentially, such that *Ni* → *Ni*/*2, Ni*/*4, Ni*/*8* ... for one or more next training iterations.

The process then moves to a tenth operation 610.

The tenth operation 610 may comprise transmitting (sending) the aggregated model to the particular UE for the next local training iteration. The tenth operation 610 may be equivalent to the third operation 503 of the FIG. 5 example.

In addition to the advantages already explained above, other advantages may include improved selection of UEs in different training iterations of a FL method. Thus, without network assistance, and in some cases without specific knowledge of each UEs processing and/or network conditions, example embodiments may reduce delay divergence in local model collection for each training iteration. If one or more straggler UEs have been identified in one or more previous training iterations, this information can be used for one or more next training sessions, avoiding the need to use network resources to collect local trained models from UEs with poor computational performance and/or poor coverage conditions. Also, in asynchronous federated learning methods, there is no requirement for the network to provide information on radio conditions, e.g., serving beam reference signal received power (RSRP) for all UEs before selection is applied for each training iteration. Example embodiments enable identification of straggler UEs whilst reducing unnecessary information flow between the network and, for example, a federated learning management entity.

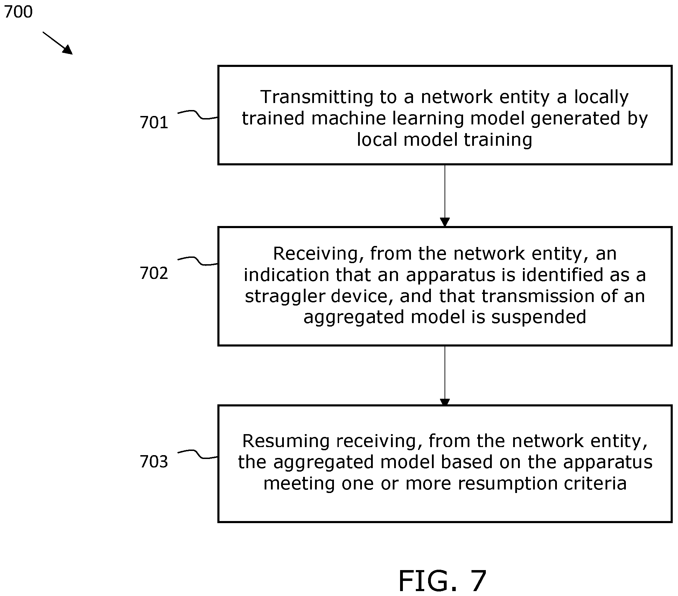

FIG. 7 is a flow diagram indicating operations 700 according to one or more other example embodiments. The operations 700 may be performed in hardware, software, firmware or a combination thereof. For example, the operations 700 may be performed individually, or collectively, by a means, wherein the means may comprise at least one processor and at least one memory storing instructions that, when executed by the at least one processor, cause the performance of the operations. The operations 700 may, for example, be performed by a device or UE, e.g., one of the first to third UEs 122 - 124 described above.

A first operation 701 may comprise transmitting, to a network entity, a locally trained machine learning model generated by local model training.

A second operation 702 may comprise receiving, from the network entity, an indication that an apparatus is identified as a straggler device and that transmission of an aggregated model is suspended.

A third operation 703 may comprise resuming receiving, from the network entity, the aggregated model based on the apparatus meeting one or more resumption criteria.

In some example embodiments, the indication that the apparatus is identified as a straggler device is based on a delay in the network entity receiving a locally trained machine learning model from the apparatus, wherein the delay exceeds a first threshold time period for more than a second threshold number of consecutive training iterations.

In some example embodiments, another operation may comprise suspending local model training using the aggregated model in response to receiving the indication that the apparatus is identified as a straggler device.

In some example embodiments, another operation may comprise collecting training data for the locally trained machine learning model during a time period between receiving the indication that the apparatus is identified as a straggler device and the resuming receiving of the aggregated model.

In some example embodiments, other operations may comprise, after receiving the indication that the apparatus is identified as a straggler device, receiving a query message from the network entity, and transmitting, to the network entity, a response message to the query message, wherein a determination that the one or more resumption criteria is met by the apparatus may be performed by the network entity based at least in part on the response message.

In some example embodiments, the query message may comprise an indication of the one or more resumption criteria and the response message may comprise either an acknowledgement message, in the case that the one or more criteria are met, or a non-acknowledgment message in the case that the one or more criteria are not met.

In some example embodiments, other operations may comprise providing a timer with the non-acknowledgment message in the case that the one or more criteria are not met; and receiving a new query message after expiry of the timer.

In some example embodiments, the one or more criteria may comprise at least one of: a network condition in which the network entity and the apparatus operate being above a third threshold; a computational power for the apparatus to support the local model training being above a fourth threshold; or new training data being available at the apparatus.

In some example embodiments, there may be provided an apparatus, comprising: one or more means for performing the above operations 700 or features related thereto.

For example, the apparatus may comprise: means for transmitting, to a network entity, a locally trained machine learning model generated by local model training; means for receiving, from the network entity, an indication that the apparatus is identified as a straggler device and that transmission of an aggregated model is suspended; and means for resuming receiving, from the network entity, the aggregated model based on the apparatus meeting one or more resumption criteria.

In some example embodiments, the indication that the apparatus is identified as a straggler device may be based on a delay in the network entity receiving a locally trained machine learning model from the apparatus, wherein the delay exceeds a first threshold time period for more than a second threshold number of consecutive training iterations.

In some example embodiments, the apparatus may further comprise: means for suspending local model training using the aggregated model in response to receiving the indication that the apparatus is identified as a straggler device.

In some example embodiments, the apparatus may further comprise: means for collecting training data for the locally trained machine learning model during a time period between receiving the indication that the apparatus is identified as a straggler device and the resuming receiving of the aggregated model.

In some example embodiments, the apparatus may further comprise: means for, after receiving the indication that the apparatus is identified as a straggler device, receiving a query message from the network entity, and means for transmitting, to the network entity, a response message to the query message, wherein a determination that the one or more resumption criteria is met by the apparatus is performed by the network entity based at least in part on the response message.

In some example embodiments, the query message may comprise an indication of the one or more resumption criteria and the response message comprises either an acknowledgement message, in the case that the one or more criteria are met, or a non-acknowledgment message in the case that the one or more criteria are not met.

In some example embodiments, the apparatus may further comprise a means for providing a timer with the non-acknowledgment message in the case that the one or more criteria are not met; and means for receiving a new query message after expiry of the timer.

In some example embodiments, the one or more criteria comprise at least one of: a network condition in which the network entity and the apparatus operate being above a third threshold; a computational power for the apparatus to support the local model training being above a fourth threshold; or new training data being available at the apparatus.

In some example embodiments, there may be provided a computer program product, comprising a set of instructions which, when executed on an apparatus, is configured to cause the apparatus to carry out a method for performing the above operations 700, or features related thereto, for example: transmitting, to a network entity, a locally trained machine learning model generated by local model training; receiving, from the network entity, an indication that an apparatus is identified as a straggler device and that transmission of an aggregated model is suspended; and resuming receiving, from the network entity, the aggregated model based on the apparatus meeting one or more resumption criteria.

The term model may mean computational model or similar. The model may comprise, but is not limited to, an artificial neural network. There are various known types of artificial neural network, including feed-forward neural networks, perceptron neural networks, convolutional neural networks, recurrent neural networks, deep neural networks, and so on. Each type may be more appropriate for a particular application or task, such as image classification, voice recognition and/or health-based analytics, although example embodiments are not limited to any particular type of model, neural network, application or task.

### Example Apparatus

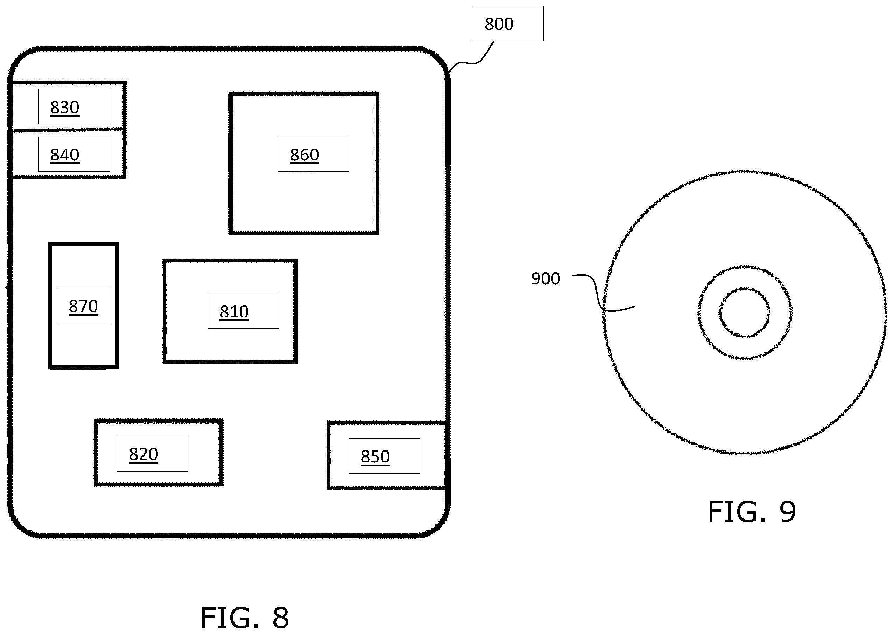

FIG. 8 illustrates an example apparatus 800 capable of supporting at least some embodiments. Illustrated is a device 800, which may comprise the network node 120 described above or a device configured to control the functioning thereof. Alternatively, the device 800 may comprise a UE described above. Comprised in device 800 is a processor 810, which may comprise, for example, a single- or multi-core processor wherein a single-core processor comprises one processing core and a multi-core processor comprises more than one processing core. The processor 810 may comprise, in general, a control device. The processor 810 may comprise more than one processor. The processor 810 may be a control device. A processing core may comprise, for example, a Cortex-A8 processing core manufactured by ARM Holdings or a Steamroller processing core produced by Advanced Micro Devices Corporation. The processor 810 may comprise at least one Qualcomm Snapdragon and/or Intel Atom processor. The processor 810 may comprise at least one Application-Specific Integrated Circuit, ASIC. The processor 810 may comprise at least one Field-Programmable Gate Array, FPGA. The processor 810 may be means for performing method steps in device 800. The processor 810 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as
implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as the network node 120, or a device configured to control the functioning thereof, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The device 800 may comprise a memory 820. The memory 820 may comprise random access memory and/or permanent memory. The memory 820 may comprise at least one RAM chip. The memory 820 may comprise solid-state, magnetic, optical and/or holographic memory, for example. The memory 820 may be at least in part accessible to processor 810. The memory 820 may be at least in part comprised in processor 810. The memory 820 may be means for storing information. The memory 820 may comprise computer instructions that processor 810 is configured to execute. When computer instructions configured to cause the processor 810 to perform certain actions are stored in the memory 820, and the device 800 overall is configured to run under the direction of the processor 810 using computer instructions from the memory 820, the processor 810 and/or its at least one processing core may be considered to be configured to perform said certain actions. The memory 820 may be at least in part comprised in the processor 810. The memory 820 may be at least in part external to the device 800 but accessible to the device 800.

The device 800 may comprise a transmitter 830. The device 800 may comprise a receiver 840. The transmitter 830 and the receiver 840 may be configured to transmit and receive, respectively, information in accordance with at least one cellular or non-cellular standard.

The transmitter 830 may comprise more than one transmitter. The receiver 840 may comprise more than one receiver. The transmitter 830 and/or the receiver 840 may be configured to operate in accordance with Global System for Mobile Communication, GSM, Wideband Code Division Multiple Access, WCDMA, 5G/NR, 5G-Advanced, i.e., NR Rel-18, 19 and beyond, Long Term Evolution, LTE, IS-95, Wireless Local Area Network, WLAN, Ethernet and/or Worldwide Interoperability for Microwave Access, WiMAX, standards, for example.

The device 800 may comprise a Near-Field Communication, NFC, transceiver 850. The NFC transceiver 850 may support at least one NFC technology, such as NFC, Bluetooth, Wibree or similar technologies.

The device 800 may comprise a User Interface, UI, 860. The UI 860 may comprise at
least one of a display, a keyboard, a touchscreen, a vibrator arranged to signal to a user by causing device 800 to vibrate, a speaker and a microphone. A user may be able to operate the device 800 via the UI 860, for example to accept incoming telephone calls, to originate telephone calls or video calls, to browse the Internet, to manage digital files stored in memory 820 or on a cloud accessible via the transmitter 830 and the receiver 840, or via NFC transceiver 850, and/or to play games.

The device 800 may comprise or be arranged to accept a user identity module 870. The user identity module 870 may comprise, for example, a Subscriber Identity Module, SIM, card installable in device 800. The user identity module 870 may comprise information identifying a subscription of a user of device 800. The user identity module 870 may comprise cryptographic information usable to verify the identity of a user of device 800 and/or to facilitate encryption of communicated information and billing of the user of the device 800 for communication effected via device 800.

The processor 810 may be furnished with a transmitter arranged to output information from processor 810, via electrical leads internal to the device 800, to other devices comprised in the device 800. Such a transmitter may comprise a serial bus transmitter arranged to, for example, output information via at least one electrical lead to the memory 820 for storage therein. Alternatively to a serial bus, the transmitter may comprise a parallel bus transmitter.

Likewise the processor 810 may comprise a receiver arranged to receive information in
The processor 810, via electrical leads internal to the device 800, from other devices comprised in the device 800. Such a receiver may comprise a serial bus receiver arranged to, for example, receive information via at least one electrical lead from the receiver 840 for processing in the processor 810. Alternatively to a serial bus, the receiver may comprise a parallel bus receiver.

The device 800 may comprise further devices not illustrated in Figure 8. For example, where the device 800 comprises a smartphone, it may comprise at least one digital camera. Some devices 800 may comprise a back-facing camera and a front-facing camera, wherein the back-facing camera may be intended for digital photography and the front-facing camera for video telephony. The device 800 may comprise a fingerprint sensor arranged to authenticate, at least in part, a user of the device 800. In some embodiments, the device 800 lacks at least one device described above. For example, some devices 800 may lack a NFC transceiver 850 and/or user identity module 870.

The processor 810, memory 820, transmitter 830, receiver 840, NFC transceiver 850, UI 860 and/or user identity module 870 may be interconnected by electrical leads internal to the device 800 in a multitude of different ways. For example, each of the
aforementioned devices may be separately connected to a master bus internal to the device 800, to allow for the devices to exchange information. However, as the skilled person will appreciate, this is only one example and depending on the embodiment various ways of interconnecting at least two of the aforementioned devices may be selected without departing from the scope of the present invention.

Figure 9 shows a non-transitory media 900 according to some embodiments. The non-transitory media 900 is a computer readable storage medium. It may be e.g. a CD, a DVD, a USB stick, a blue ray disk, etc. The non-transitory media 900 stores computer program instructions, causing an apparatus to perform the method of any preceding process for example as disclosed in relation to the flow diagrams in this specification and related features thereof.

The described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in dependant claims are mutually freely combinable unless otherwise explicitly stated. Furthermore, it is to be understood that the use of "a" or "an", that is, a singular form, throughout this document does not exclude a plurality.

## Claims

1. An apparatus (120), comprising:
means for identifying one or more straggler devices among a plurality of devices (122 - 127);
means for suspending transmission of an aggregated model to the one or more straggler devices for local model training; and
means for resuming transmission of the aggregated model to at least one of the one or more straggler devices for local model training if the at least one straggler device meets one or more resumption criteria at a subsequent time,
wherein a particular device of the plurality of devices is identified as a straggler device based on a delay in receiving a locally trained machine learning model from the particular device for updating the aggregated model, wherein the delay exceeds a first threshold time period for more than a second threshold number of consecutive training iterations.

2. The apparatus of claim 1, wherein
the means for identifying the one or more straggler devices is configured to:
provide respective counters for the plurality of devices;
increment a respective counter for a particular device if its respective locally trained machine learning model is not received within the first threshold time period; and
identify the particular device as a straggler device if the respective counter reaches a number which is more than the second threshold number.

3. The apparatus of claim 2, further comprising:
means for resetting the respective counters for the plurality of devices at resumption of a machine learning session of which the plurality of devices are members;
means for resetting the respective counter for a particular straggler device for a next training iteration if the respective locally trained machine learning model is received from the particular straggler device within the first threshold time period; and
means for resetting the respective counter for a particular straggler device for a next training iteration if the particular straggler device meets the one or more resumption criteria.

4. The apparatus of any of claims 2 to 3, further comprising: means for modifying the second threshold number for a particular straggler device if the particular straggler device meets the one or more resumption criteria, such that the particular straggler device will be re-identified as a straggler device in one or more next training iterations if its respective counter reaches a number which is more than the modified second threshold number.

5. The apparatus of claim 4, wherein the modified second threshold number is smaller than the second threshold number.

6. The apparatus of claim 5, wherein the modified second threshold number is one-half of the second threshold number or is reduced exponentially.

7. The apparatus of any of claims 2 to 6, further comprising:
means for incrementing the respective counter for a particular straggler device if the particular straggler device does not meet the one or more resumption criteria.

8. The apparatus of any preceding claim, further comprising:
means for transmitting, to the identified one or more straggler devices, a notification message indicating its or their identification as a straggler device, wherein the notification message is for causing the one or more straggler devices to suspend local model training using the aggregated model.

9. The apparatus of any preceding claim, further comprising:
means for transmitting, after suspending transmission of the aggregated model to the one or more straggler devices, a query message to the one or more straggler devices; and
means for determining if at least one straggler device meets the one or more resumption criteria based on at least receiving a response message to the query message.

10. The apparatus of claim 9, wherein the means for determining if the at least one straggler device meets the one or more resumption criteria is configured to determine that the least one straggler device meets the one or more resumption criteria if the response message is an acknowledgment message indicating that the one or more resumption criteria are met or if the response message comprises one or more parameters usable to determine that the one or more resumption criteria are met.

11. The apparatus of claim 10, wherein the means for determining if the at least one straggler device meets the one or more resumption criteria is configured to determine that the least one straggler device does not meet the one or more resumption criteria if no response message is received, if the response message is a non-acknowledgment message indicating that the one or more resumption criteria are not met or if the response message comprises one or more parameters usable to determine that the one or more resumption criteria are not met.

12. The apparatus of claim 11, further comprising:
means for, upon determining that the one or more resumption criteria are not met, providing a timer,
means for transmitting a new query message after expiry of the timer for re-determining if the at least one straggler device meets the one or more resumption criteria.

13. The apparatus of any preceding claim, wherein
the one or more resumption criteria comprise at least one of:
a network condition in which the apparatus and the at least one straggler device operates being above a third threshold;
a computational power for the at least one straggler device to support the local model training being above a fourth threshold; or
new training data being available at the at least one straggler device.

14. A method (300), comprising:
identifying (301) one or more straggler devices among a plurality of devices;
suspending (302) transmission of an aggregated model to the one or more straggler devices for local model training; and
resuming (303) transmission of the aggregated model to at least one of the one or more straggler devices for local model training if the at least one straggler device meets one or more resumption criteria at a subsequent time,
wherein a particular device of the plurality of devices is identified as a straggler device based on a delay in receiving a locally trained machine learning model from the particular device for updating the aggregated model, wherein the delay exceeds a first threshold time period for more than a second threshold number of consecutive training iterations.

15. A computer program product, comprising a set of instructions which, when executed on an apparatus, is configured to cause the apparatus to carry out a method (300), comprising:
identifying (301) one or more straggler devices among a plurality of devices;
suspending (302) transmission of an aggregated model to the one or more straggler devices for local model training; and
resuming (303) transmission of the aggregated model to at least one of the one or more straggler devices for local model training if the at least one straggler device meets one or more resumption criteria at a subsequent time,
wherein a particular device of the plurality of devices is identified as a straggler device based on a delay in receiving a locally trained machine learning model from the particular device for updating the aggregated model, wherein the delay exceeds a first threshold time period for more than a second threshold number of consecutive training iterations.
